# EUROPEAN PATENT APPLICATION

(11) **EP 3 145 263 A1**
(43) Date of publication of application: **22.03.2017**
(21) Application number: 15793352.4
(22) Date of filing: 08.05.2015
(51) Int. Cl.: H04W 72/04, H04W 28/06, H04W 72/12

(54) **RADIO BASE STATION, USER EQUIPMENT, AND RADIO COMMUNICATION METHOD**

(30) Priority: 15.05.2014 JP 2014101529
(71) Applicant: NTT DOCOMO, INC., Chiyoda-ku Tokyo 100-6150 (JP)
(72) Inventor: YASUKAWA, Shimpei, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2015/063246
(87) International publication number: WO 2015/174328

(57) **Abstract**

The present invention is designed so that, even when communication is carried out by using frequency-divisioned paired bands, radio resources can be used effectively. The present invention provides a transmitting/receiving section that carries out transmission and reception with a user terminal by using frequency-divisioned paired bands, a control section that applies control so that UL communication and DL communication are carried out in at least one band of the paired bands, and a generating section that generates downlink control signals to control UL communication and DL communication in the one band, and the control section applies control so that the downlink control signals are transmitted from the other band paired with the one band, or from another component carrier.

## Description

### Technical Field

The present invention relates to a radio base station, a user terminal and a radio communication method that are applicable to next-generation communication systems.

### Background Art

In the UMTS (Universal Mobile Telecommunications System) network, the specifications of long term evolution (LTE) have been drafted for the purposes of further increasing high-speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Rel. 10/11).

In the LTE-A system, a HetNet (Heterogeneous Network), in which small cells (for example, pico cells, femto cells and so on) each having local a coverage area of a radius of approximately several tens of meters are formed within a macro cell having a wide coverage area of a radius of approximately several kilometers, is under study. Also, in relationship to HetNets, a study is in progress to use carriers of different frequency bands between the macro cell (macro base station) and the small cells (small base stations), in addition to the same frequency band.

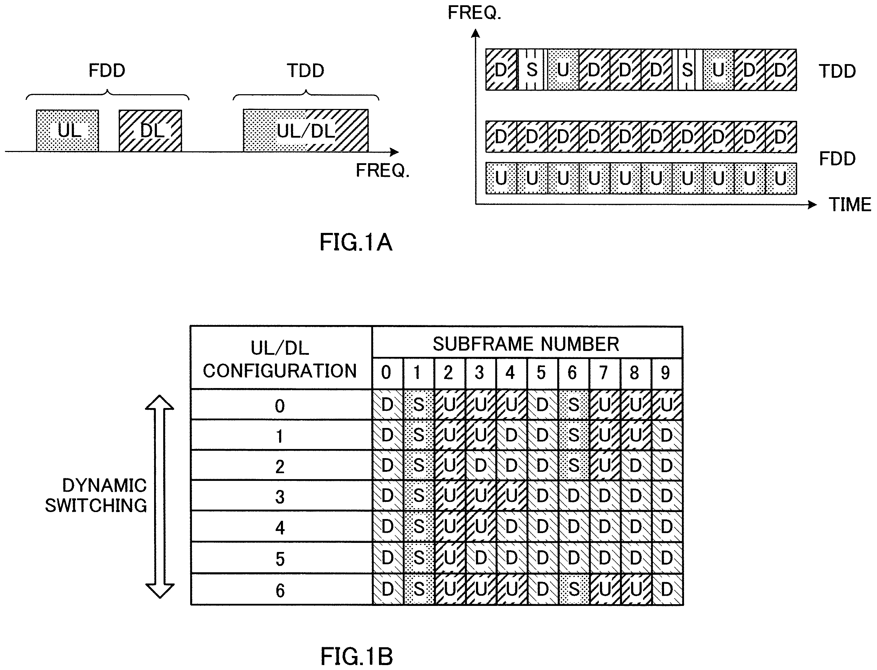

As duplexing schemes in radio communication in LTE and LTE-A systems, there are frequency division duplexing (FDD) to divide between the uplink (UL) and the downlink (DL) based on frequency, and time division duplexing (TDD) to divide between the uplink and the downlink based on time (see FIG. 1A). In TDD, the same frequency region is employed in both uplink and downlink communication, and signals are transmitted and received to and from one transmitting/receiving point by dividing between the uplink and the downlink based on time.

In TDD in LTE systems, a plurality of frame configurations (DL/UL configurations) with different transmission ratios between uplink subframes (UL subframes) and downlink subframes (DL subframes) are defined. To be more specific, as shown in FIG. 1B, seven frame configurationsnamely, DL/UL configurations 0 to 6 -- are defined, where subframes #0 and #5 are allocated to the downlink and subframe #2 is allocated to the uplink.

### Citation List

### Non-Patent Literature

Non-Patent Literature 1: 3GPP TS 36. 300 "Evolved UTRA and Evolved UTRAN Overall Description"

### Summary of Invention

### Technical Problem

In the above-mentioned HetNets, many small cells may be placed in the macro cell. Generally speaking, the ratio between DL traffic and UL traffic is not fixed, and changes over time or between locations. The ratio of traffic in the uplink and the downlink tends to be uneven particularly in small cells that are provided in hotspots, and the volume of traffic is also likely to be uneven between cells.

Consequently, when TDD is employed, from the perspective of allowing effective use of radio resources, the UL/DL configurations shown in FIGs. 1 are preferably switched around in accordance with the actual variation of traffic, rather than fixed. So, in TDD of the LTE-A system (Rel. 12) and later systems, a study is in progress to change the transmission ratio of DL subframes and UL subframes dynamically or semi-statically in the time domain, per transmitting/receiving point (which may be a radio base station, a cell, etc.) (referred to as "dynamic TDD" or "eIMTA").

On the other hand, in cells to use FDD (FDD cells), the band for DL communication and the band for UL communication are divided based on frequency, resulting in a state in which the ratio of UL/DL resources relies on band allocation (fixed ratio). Consequently, there is a demand to use radio resources effectively depending on the situation of communication, even when communication is carried out by using frequency-divisioned paired bands as in FDD.

The present invention has been made in view of the above, and it is therefore an object of the present invention to provide a radio base station, a user terminal and a radio communication method, whereby it is possible to use radio resources effectively even when communication is carried out using frequency-divisioned paired bands.

### Solution to Problem

One aspect of the radio base station according to the present invention provides a transmitting/receiving section that carries out transmission and reception with a user terminal by using frequency-divisioned paired bands, a control section that applies control so that UL communication and DL communication are carried out in at least one band of the paired bands, and a generating section that generates downlink control signals to control UL communication and DL communication in the one band, and the control section applies control so that the downlink control signals are transmitted from the other band paired with the one band, or from another component carrier.

### Advantageous Effects of Invention

According to the present invention, it is possible to use radio resources effectively even when communication is carried out by using frequency-divisioned paired bands.

### Brief Description of Drawings

FIGs. 1 provide diagrams to explain the configurations of FDD and TDD;
FIGs. 2 provide diagrams to show examples of FleD structures;
FIG. 3 is a diagram to show another example of an FleD structure;
FIGs. 4 provide diagrams to show other examples of FleD structures;
FIG. 5 is a diagram to show an example of a structure in which virtual carrier IDs are configured in FleD DL resources;
FIGs. 6 provide diagrams to show an example of an FleD DL resource structure;
FIG. 7 is a diagram to show examples of signal allocation in UL subframes and DL subframes;
FIGs. 8 provide diagrams to show examples of FleD DL subframe configurations;
FIG. 9 is a diagram to show examples of DM-RS configurations to apply to FleD DL resources;
FIGs. 10 provide diagrams to show examples of UL signal transmission methods based on whether or not there is a DL signal canceller in a radio base station;
FIGs. 11 provide diagrams to show examples of SRS configuration methods based on the FleD DL subframe configuration;
FIG. 12 is a schematic diagram to show an example of a radio communication system according to the present embodiment;
FIG. 13 is a diagram to explain an overall structure of a radio base station according to the present embodiment;
FIG. 14 is a diagram to explain a functional structure of a radio base station according to the present embodiment;
FIG. 15 is a diagram to explain an overall structure of a user terminal according to the present embodiment; and
FIG. 16 is a diagram to explain a functional structure of a user terminal according to the present embodiment.

### Description of Embodiments

A HetNet refers to a radio communication system in which macro cells and small cells are placed to geographically overlap each other at least in part. A HetNet is comprised of a radio base station that forms a macro cell (hereinafter referred to as a "macro base station"), a radio base station that forms a small cell (hereinafter referred to as a "small base station"), and a user terminal that communicates with the macro base station and the small base station.

The ratio between DL traffic and UL traffic in each small cell is not fixed, and varies over time or between locations. As a result of this, cases occur where traffic (for example, DL traffic) is concentrated in a small cell.

In this way, in order to prevent a decrease of throughput in the event one traffic (for example, DL traffic) is concentrated in a small cell, in TDD, the transmission ratio of DL subframes and UL subframes is controlled to change dynamically per transmitting/receiving point (dynamic TDD). To be more specific, seven frame configurations -- namely, the above-mentioned UL/DL configurations 0 to 6 of FIG. 1B -- are switched around dynamically depending on the situation of communication (the condition of traffic) in each cell. For example, when DL traffic is concentrated, a UL/DL configuration with a high DL subframe ratio (for example, UL/DL configuration 5) is employed.

Meanwhile, small cells might employ FDD. However, in an FDD cell, the band for DL communication and the band for UL communication are divided based on frequency (see FIG. 1A), and the UL/DL resource ratio is a fixed ratio. Consequently, although it may be possible to switch and control the UL/DL resource ratio dynamically or semi-statically over time even in FDD, what control should be applied is the problem in this case. Also, unlike TDD in which the premise is that cells are synchronized, FDD covers scenarios with asynchronous cells as well. Consequently, advantages that can be achieved by applying dynamic TDD mechanisms (for example, interference coordination) on an as-is basis are limited.

So, the present inventors have worked on the method of adequately changing and controlling the UL/DL ratio when communication is carried out using frequency-divisioned paired bands (for example, conventional FDD bands), and arrived at the present invention. To be more specific, the present inventors have arrived at applying control so that, when the UL/DL ratio is changed between frequency-divisioned paired bands, UL communication and DL communication are carried out using at least one band, and, furthermore, downlink control signals to control the UL communication and DL communication in this one band are transmitted from another band (for example, the other band forming the pair, or another component carrier, including the primary cell).

For example, DL signals are transmitted (DL communication) using part of the UL band in conventional FDD, and control signals (for example, UL grant, DL assignment, etc.) to control the scheduling of the UL band are transmitted from the DL band in conventional FDD. By this means, even when communication is carried out using frequency-divisioned paired bands, it is still possible to use radio resources effectively. Also, by transmitting downlink control signals from another band, even when the transmission power for DL communication is lowered, user terminals can receive the downlink control signals adequately, in one band (for example, the UL band in FDD) where UL communication and DL communication are carried out.

Now, the present embodiment will be described in detail below with reference to the accompanying drawings. Note that, although the present embodiment is suitable for use in small cells in HetNets as mentioned earlier, the application of the present embodiment is by no means limited to HetNets or small cells. Also, although an example (Flexible Duplex (FleD)) will be described in the following description in which DL transmission is carried out by using an FDD UL band. The present embodiment is not limited to DL transmission using an FDD UL band, and is equally applicable to other forms of flexible duplex.

### (FleD Structure)

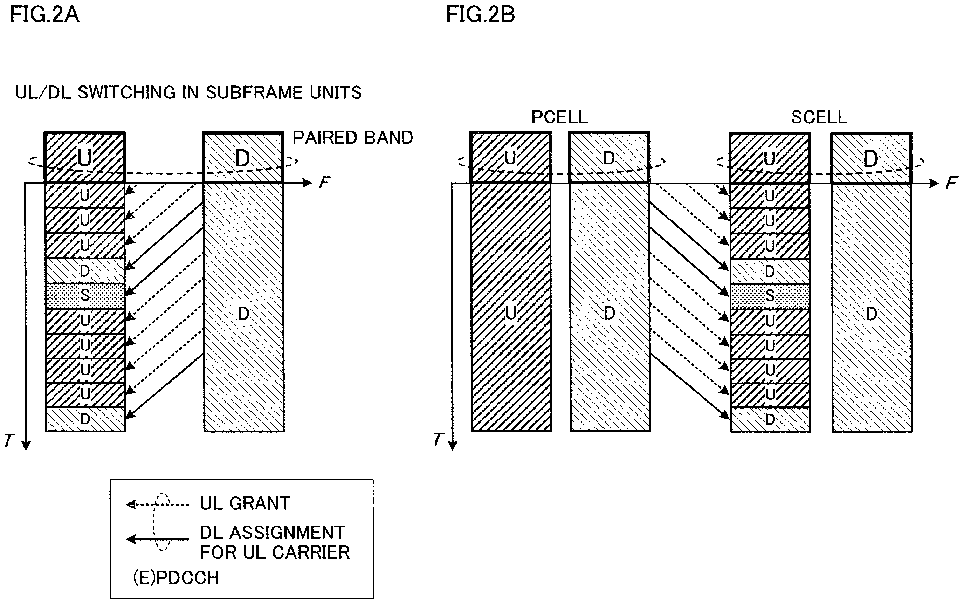

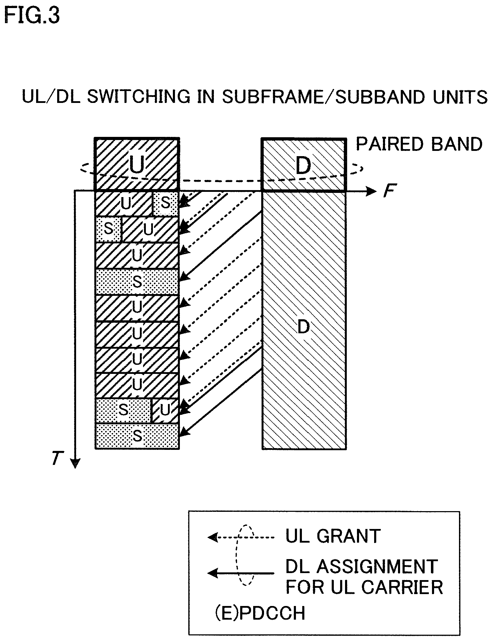

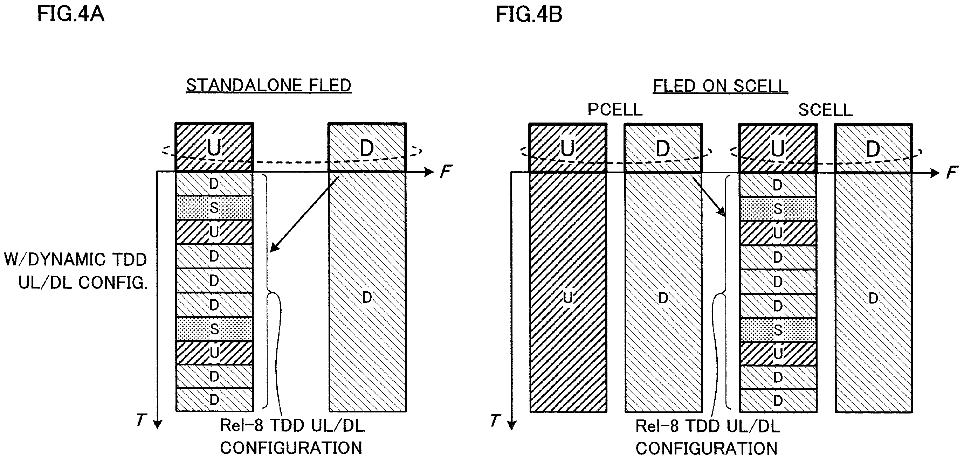

FIGs. 2 to FIGs. 4 show examples of FleD structures that are applicable to the present embodiment. FIGs. 2 and 3 show cases where TDD UL/DL configurations are not taken into consideration and FIGs. 4 show cases where TDD UL/DL configurations are used.

FIG. 2A shows a case where the UL/DL configuration is changed (switched) in subframe units in an FDD UL band (UL carrier). In this case, the scheduling (resource allocation) control for UL transmission and DL transmission in the UL band is carried out using the DL band (DL carrier) in FDD that is paired with the UL band.

For example, a radio base station dynamically controls the resource allocation for the UL transmission and DL transmission in the UL band by using downlink control signals (UL grant and/or DL assignment) that are transmitted in DL bands. The radio base station can send UL HARQ feedback by using the PHICH (Physical Hybrid-ARQ Indicator CHannel), which is transmitted in DL bands. Also, the radio base station can use the DL band that is paired with the UL band in which UL communication and DL communication are carried out, for DL communication only.

When dynamic UL/DL switching is not necessary, it may be possible to use higher layer signaling, including RRC signaling, as downlink control signals, instead of the PDCCH and the EPDCCH. In this case, the master base station (MeNB) in dual connectivity may serve as the carrier to transmit control signals.

Also, when carrier aggregation (CA) is employed, it is possible to control the resource allocation for UL transmission and DL transmission in a secondary cells' UL bands by using downlink control signals that are transmitted from other component carriers (CCs) including the primary cell (PCell) (see FIG. 2B). FIG. 2B shows a case where the PCell (PCC) is used as another component carrier. Note that CA refers to the bundling of a plurality of component carriers (CCs) into a wide band, where a predetermined band (for example, the LTE system band) constitutes one unit. When FleD is applied to a plurality of carriers, the control overhead may be reduced by switching UL/DL among a plurality of carriers by using a single control signal.

Also, a structure may be employed here in which the UL/DL configuration is changed in subband units in an FDD UL band (UL carrier). For example, as shown in FIG. 3, it is possible to change the UL/DL configuration in a UL band by combining subframe and subband units. In FIG. 3, too, it is possible to transmit downlink control signals and UL HARQ feedback (PHICH) by using the DL carrier of the paired bands or through cross-carrier from the PCell.

Also, when a UL resource and a DL resource are allocated to the same subframe, it is preferable to apply control so that UL and DL are not scheduled concurrently for the same user terminal, in the same band (UL band). Also, it is preferable if the radio base station applies control so that DL signals that are transmitted in a UL band are cancelled from going around to the uplink receiver. By this means, it is possible to reduce the interference which DL communication causes against UL communication in a UL band.

FIGs. 4 show cases where TDD UL/DL configurations (for example, the TDD UL/DL configurations according to Rel. 8) are used in FDD UL bands. In particular, FIG. 4A shows a case where FDD is used in standalone (standalone FleD) or as a PCell, and FIG. 4B shows a case where FDD is used in an SCell.

In FIG. 4A, the radio base station transmits downlink control signals (scheduling information) for DL transmission and UL transmission in the UL band by using the DL band that is the paired band of the UL band. On the other hand, in FIG. 4B, the radio base station transmits the downlink control signals for DL transmission and UL transmission in the UL band by using another cell (PCell) that employs CA with a cell having a UL band and a DL band. In either case, it is possible to send HARQ feedback within the FleD carrier by using TDD UL/DL configurations. It is also possible to simplify the control by supporting only part of the TDD UL/DL configurations.

In this way, by performing UL communication and DL communication using an FDD UL band, it is possible to use radio resources effectively even when communication is carried out by using frequency-divisioned paired bands. Also, by transmitting control signals to control UL communication and DL communication in a UL band and so on from another band (for example, the paired DL band or the PCell), it is possible to process UL communication and DL communication properly in user terminals.

### (FleD Carrier Configuration)

As mentioned earlier, when FleD is employed, it is possible to use a UL band for DL transmission. Consequently, even when communication is carried out using one FDD carrier (paired band), given that the UL band is used for DL transmission, two bands (UL band and DL band) are used for DL transmission in effect. Meanwhile, when a radio base station and a user terminal use a UL band for DL transmission, the radio base station and the user terminal have to identify between two different bands (the UL band to use in DL transmission and the DL band) and execute scheduling, retransmission control (HARQ) and so on.

So, according to the present embodiment, DL resources in a UL band are assigned virtual carrier IDs and controlled as virtual DL carriers. Information about virtual carrier IDs can be reported to user terminals by using higher layer signaling (for example, broadcast, RRC signaling and so on).

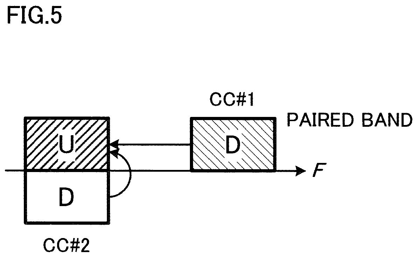

For example, SCell indices that are used in CA can be used as virtual carrier IDs (see FIG. 5). In FIG. 5, CC #2 is assigned to a DL resource of a UL band as a virtual carrier ID. In this case, when a user terminal that is already assigned cell information (for example, CC #1) is assigned cell information (for example, CC #2) again and there is a band (UL carrier) paired with the DL carrier of this cell, the user terminal can recognize that FleD is applied.

Alternatively, dedicated indices may be used as virtual carrier IDs. In this case, the user terminal can recognize that FleD is applied by receiving the dedicated indices of virtual carrier IDs.

Also, the UL bands to correspond to virtual DL carriers can be determined based on the mode of communication. For example, when only one FDD carrier is used, the carrier that is associated with the virtual DL carrier can be determined, implicitly, to be a UL resource of the same band (UL band). On the other hand, when CA is used, UL bands can be associated with the virtual DL carriers by way of higher layer signaling (RRC signaling and so on) (see FIG. 5).

Also, when using SCell indices that are used in CA as virtual carrier IDs, the radio base station may reduce the number of CA DL carriers to configure for user terminals by the number of carriers to which FleD is applied (the number of virtual DL carriers).

Also, it is equally possible to control a user terminal to report information about bands that support FleD (user capability information (UE capability)) to the radio base station. For example, it is possible to use conventional user capability information that indicates the combinations of CA bands.

To be more specific, it is possible to use a CA band combination list that is contained in user capability information. The CA band combination list is a list that indicates the bands to which the user terminal applies CA. For example, by reporting the same band twice in the CA band combination list, the user terminal can use the first one as conventional capability and the second one as FleD capability. In one example, when the user terminal reports {band 1, band 1, band 3}, the radio base station can judge that CA is possible between band 1 and band 3, and that band 1 supports FleD.

Alternatively, it is also possible to define an RF parameter that indicates whether or not FleD is supported, in the user capability information, on a per band basis, and make the user terminal report whether or not FleD is supported, on a per band basis.

Also, whether or not FleD can be applied, the applicable FleD structures and so on may be determined based on information as to whether TDD/FDD dual mode is supported or not supported, the number of bands supported, and so on.

Also, a carrier (master carrier) that controls FleD can use the other band of the pair, or use other component carriers including the primary cell, as mentioned earlier. In this case, the following methods are possible methods of determining the master carrier:
(1) making the primary cell/master eNB the master carrier;
(2) making a predetermined frequency band the master carrier; and
(3) sending a report from an eNB through higher layer signaling including RRC signaling and broadcast.

According to above method (1) and method (2), the master carrier can be determined without signaling. Meanwhile, according to method (3), signaling is required, but it is possible to prevent the load of FleD control signal transmission from being unbalanced in a specific carrier.

### (Channel Design of FleD Carrier)

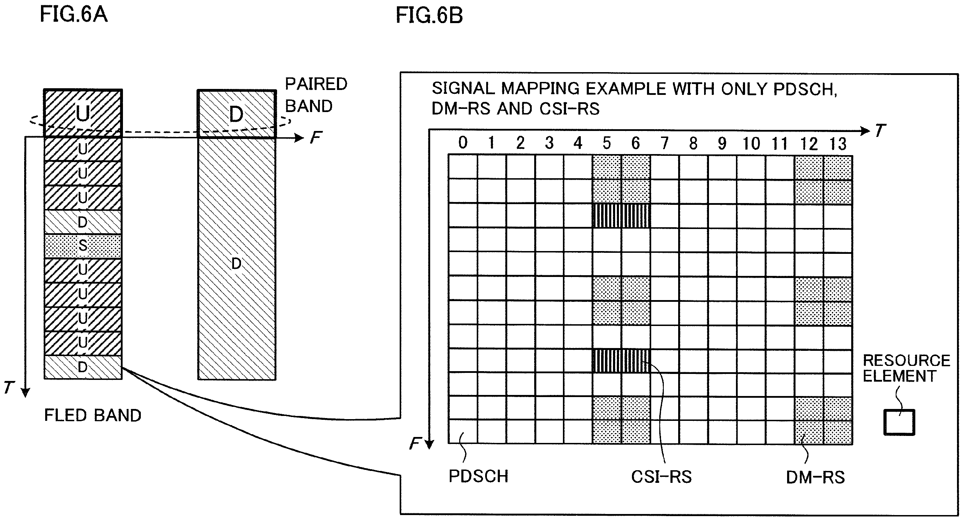

For the structure of an FleD carrier (FDD UL band), as shown in above FIGs. 2 and FIG. 3, UL communication and DL communication can be switched and controlled in subframe units, or in combinations of subframe and subband units. Also, in above-described FleD, when there is a UL band in which DL signals are transmitted, there is also a DL band that is paired with the UL band, or another CCs' DL (see FIG. 6A).

Consequently, in DL resources (FleD DL resources) allocated to an FleD carrier (UL band), it is not always necessary to transmit control signals and broadcast information. Consequently, in DL resources to allocate to an FleD carrier, it may be possible to allocate downlink data signals and signals that accompany (that are associated with) these downlink data signals, selectively, instead of allocating control signals and/or broadcast signals.

For example, for FleD DL resources, it is possible to make the downlink shared channel (PDSCH), the demodulation reference signal (DM-RS) and the channel state measurement reference signal (CSI-RS) the minimum configuration for allocation (see FIG. 6B). By this means, it is possible to use radio resources effectively because the allocation of downlink data signals (PDSCH signals) can be increased.

Alternatively, the radio base station can use uplink signal structures (for example, the uplink shared channel (PUSCH), the demodulation reference signal (DM-RS), the SRS, etc.) for downlink data transmission in a UL band.

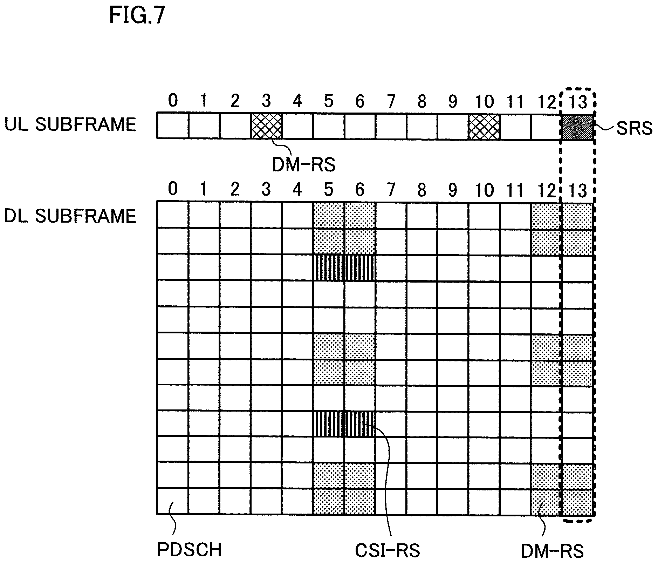

Also, according to the present embodiment, it is possible to control the channels and reference signals to allocate to an FleD carrier by taking into account existing user terminals (legacy UEs) and so on. For example, an existing user terminal allocates the SRS to the last symbol of a subframe. Consequently, when DL resources are allocated to a UL band, there is a threat that the SRS which the existing user terminal allocates to the last symbol collides with the DL channels and downlink reference signals that are allocated to the DL resources (for example, the DM-RS, the PDSCH, etc.) (see FIG. 7).

Also, as shown in above FIG. 6B, when cell-specific reference signals (CRSs) are not allocated to DL resources allocated to a UL band, no reference signal is placed in the top five symbols. This has a threat of leading to a deterioration of the accuracy of channel estimation. Also, when AGC (Automatic Gain Control) is applied using reference signals such as the CRS, it takes time until adequate configurations are applied.

Also, when making a switch from a DL subframe to a UL subframe in an FleD carrier (UL band), it is necessary to provide a guard period for DL/UL switching.

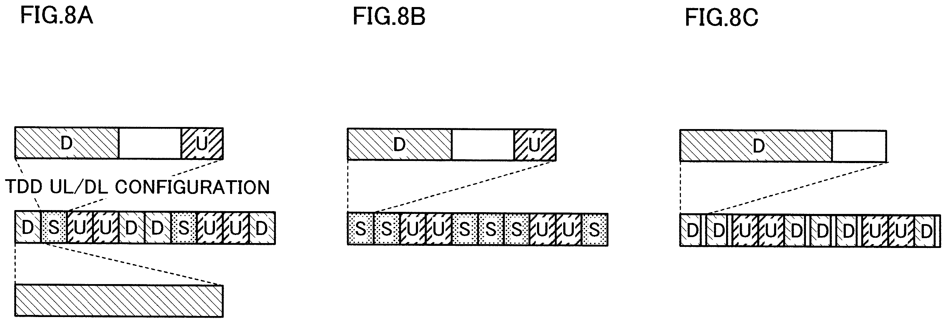

Consequently, according to the present embodiment, it is preferable to configure the FleD DL subframe configuration by taking these points into account. Here, the FleD DL subframe configuration refers to the subframe configuration that is used when DL communication is carried out in a UL band. Now, examples of FleD DL subframe configurations that are applicable to the present embodiment will be described below with reference to FIGs. 8.

### <FleD DL Subframe Configuration 1>

As FleD DL subframe configurations, TDD UL/DL configurations and special subframe configurations can be used. FIG. 8A shows a case of using a DL subframe and a special subframe in TDD when carrying out DL transmission by using an FDD UL band. The special subframe can be applied when DL transmission (DL subframe) switches to UL transmission (UL subframe) in the UL band.

In this case, the radio base station can report information about the UL/DL configuration through higher layer signaling (for example, RRC signaling and so on) to user terminals. Alternatively, the radio base station may report the UL/DL configuration to user terminals by using reconfiguration signaling, which is reported when the UL/DL configuration is changed (dynamic TDD, eIMTA, etc.).

### <FleD DL Subframe Configuration 2>

Also, the special subframe configuration can be used as an FleD DL subframe configuration. FIG. 8B shows a case of using a special subframe when carrying out DL transmission by using an FDD UL band. In this case, DL transmission is always carried out using special subframes, and not limited to the DL subframes where DL transmission (DL subframe) switches to UL transmission (UL subframe).

In this case, the radio base station sends signaling regarding the DL subframes or the special subframes to user terminals. For example, the radio base station can send signaling to user terminals, dynamically, by using downlink control information (DCI) and so on.

### <FleD DL Subframe Configuration 3>

Also, as an FleD DL subframe configuration, it is possible to transmit DL signals by using a subframe configuration in which DL signals are allocated over a predetermined number of symbols (number of samples) from the top of a subframe (see FIG. 8C). In this case, one pattern of the number of symbols to use in DL transmission may be defined and employed as an FleD DL subframe configuration, or multiple patterns (for example, two patterns) may be defined and employed as FleD DL subframe configurations. Note that, in FIG. 8C, a structure may be employed in which no gap is provided at all taking into account how small the propagation delays in the small cells are.

When a plurality of FleD DL subframe configurations are defined, the radio base station can signal a predetermined subframe configuration to user terminals by using downlink control information and/or the like. For example, in order to define two patterns of FleD DL subframe configurations, it is possible to use the PUCCH transmission power control bit in downlink control information (DL assignment). In FleD, PUCCH transmission power control can be implemented by means of DL assignment for DL carriers, and can be used for another purpose in FleD carriers.

Also, as shown in FIG. 8C, a (puncturing) structure may be employed here in which a predetermined number of symbols (number of samples) from the top of a DL subframe are used for DL transmission, and no signal is transmitted in the rest of the symbols.

In this way, the radio base station can transmit DL signals by using any of the FleD DL subframe configurations shown in above FIGs. 8. Also, in FIGs. 8, it is possible to use the DL resources (area reserved for DL transmission) allocated to the UL band to transmit predetermined signals (channels). Now, the channels and reference signals to allocate to the DL resources to be allocated to the UL band will be described below.

For example, a structure may be employed here in which part or all of the synchronization signals (PSS/SSS), the broadcast channel (PBCH), the cell-specific reference signals (CRSs), the PCFICH, the downlink control channel (PDCCH/EPDCCH) and the SIBs are not transmitted in FleD DL resources. Note that these signals can be transmitted from the DL band that is paired with the UL band, or from the PCell. Note that it is possible to transmit the CRSs or part of the CRSs such as a one-port CRS, or the reference signals (the CRS, the CSI-RS, the PRS or combinations of these) that are necessary for DRSs (Discovery RSs), in part or all of the subframes/symbols. For example, it is also possible to use a mode to transmit these only in the top two symbols of a subframe. Also, part or all of the broadcast information may be transmitted through higher layer signaling such as RRC signaling.

Also, the radio base station may transmit the downlink demodulation reference signal (DM-RS) in FleD DL subframes. By this means, user terminals become capable of adequately demodulating the PDSCH allocated to FleD DL resources.

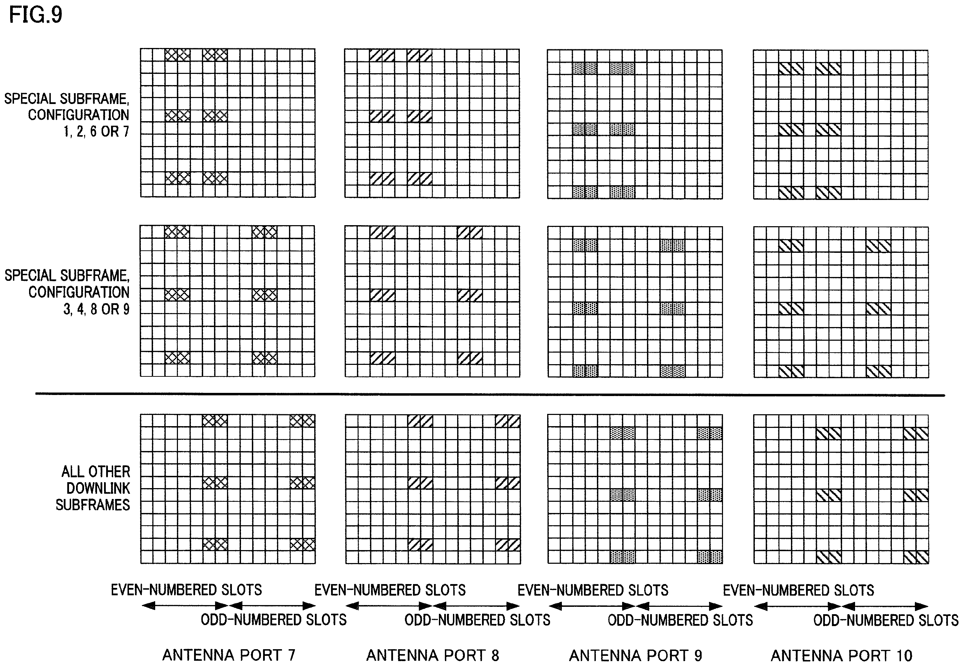

Note that, with conventional DM-RSs, a plurality of types of mapping patterns are defined depending on the types of subframe configurations (normal subframe configuration, special subframe configuration, etc.) (see FIG. 9). Consequently, the radio base station can apply control so that one of these is used in FleD DL subframes. Which mapping pattern is used may be indicated with fixed values, or may be reported to user terminals by using downlink control information, higher layer signaling (for example, RRC signaling) and so on. When mapping that is based on special subframe configurations is used, DM-RSs are mapped in the top five symbols as well, so that improved demodulation performance is expected when the PDCCH is not transmitted.

Also, the radio base station allocates the downlink shared channel (PDSCH) to FleD DL resources (FleD DL subframes). At this time, it is preferable if the radio base station controls the allocation of PDSCH resources to allocate to FleD DL resources by taking into account the interference against the PUCCHs of neighboring cells. For example, PUCCHs are allocated to both ends of the system band. Consequently, the radio base station applies control so that the PDSCH that is allocated to FleD DL resources are allocated not to overlap the PUCCHs (the PDSCH is not allocated to both ends of the system band).

By this means, even when DL communication is carried out using a UL band, it is possible to reduce the impact upon other cells' PUCCHs and so on.

### (FleD Subframe Configuration Reporting)

As noted earlier, the radio base station can report DL communication-related information (DL scheduling) for a UL band to user terminals by using the DL band that is paired with the UL band, or by using the PCell. For example, the radio base station schedules user terminals dynamically by using a downlink control channel (PDCCH/EPDCCH) of the paired DL band.

Also, the radio base station may report the UL/DL configuration of every frame, in addition to the reporting via a downlink control channel. For example, in conventional dynamic TDD (eIMTA), the radio base station can report the UL/DL configuration of every frame by using the signaling that is used to report the UL/DL configurations (L1 reconfiguration signaling). In this case, instead of the eIMTA RNTIs (Radio Network Temporary Identifiers) that are used in eIMTA signaling, the radio base station uses RNTIs for FleD (FleD RNTIs).

Also, it is equally possible to define fixed DL subframes and/or fixed UL subframes by reporting information about UL/DL explicitly and/or implicitly, apart from the dynamic scheduling for user terminals. Now, the fixed DL subframes and fixed UL subframes will be described below.

### <Fixed UL Subframes>

A user terminal that supports FleD can judge that a subframe that is reported from the radio base station and/or a subframe in which predetermined signal transmission is configured is a UL subframe. For example, the user terminal specifies fixed UL subframes based on information about the fixed UL subframes, which is signaled from the radio base station. The information about fixed UL subframes can be reported from the radio base station to the user terminal by using downlink control information, RRC signaling, SIBs and so on. Note that the information about fixed UL subframes can be reported by using the paired DL band, the PCell and so on. The subframes to be fixed UL subframes may be determined in advance as well.

Also, the user terminal may operate by judging that a subframe in which a PRACH resource and/or SRS transmission is configured is a fixed UL subframe.

Also, the user terminal may carry out other UL transmissions than the UL transmissions commanded by the dynamic scheduling (UL grant) of UL signals in the fixed UL subframes in the FleD carrier. For example, the user terminal can transmit the SRS, the PRACH and so on in the fixed UL subframes, in addition to the subframes in which the PUSCH is scheduled. By this means, even when the UL band is used for DL communication, it is possible to increase the opportunities to transmit the PRACH, the SRS and so on.

Also, the user terminal can assume a (UL transmission-only) configuration, in which the fixed UL subframes are not applied to DL transmission in the UL band in the FleD carrier.

Note that, when using the signaling of dynamic TDD (eIMTA) UL/DL configurations, it is possible to define fixed UL subframes based on an HARQ reference UL/DL configuration that is reported in higher layer signaling. In this case, it is preferable to control user terminals (legacy UEs) that do not support FleD not to connect with the FleD cells (FleD carriers).

Here, the HARQ reference UL/DL configuration refers to the UL/DL configuration that is used in HARQ timings. In dynamic TDD, it is possible to configure and report the UL/DL configuration to use in HARQ timings, apart from the UL/DL configuration that is actually employed, by taking into account changes of the UL/DL configuration. Consequently, according to the present embodiment, the FleD carrier subframe configuration is reported to the user terminal by using the reference UL/DL configuration that is used in dynamic TDD.

### <Fixed DL Subframes>

A user terminal that supports FleD can judge that a subframe that is reported from the radio base station and/or a subframe in which predetermined signal transmission is configured is a DL subframe. For example, the user terminal specifies fixed DL subframes based on information about the fixed DL subframes, which is signaled from the radio base station. The information about fixed DL subframes can be reported from the radio base station to the user terminal by using RRC signaling, SIBs and so on.

Also, the radio base station may report the fixed DL subframes to the user terminal by using the common search space that is used to allocate downlink control information. Note that the information about fixed DL subframes can be reported by using the paired DL band, the PCell and so on.

Also, the user terminal may operate by judging that a subframe in which CSI-RS transmission is configured is a fixed DL subframe.

The user terminal can receive measurement reference signals (for example, the CSI-RS) in fixed DL subframes. For example, the user terminal can receive the CSI-RS in the fixed DL subframes, in addition to the subframes in which the PDSCH is scheduled. By this means, it is possible to increase the number of times of channel estimation to use the CSI-RS.

Note that, when using the signaling of dynamic TDD (eIMTA) UL/DL configurations, it is possible to define fixed DL subframes based on an HARQ reference UL/DL configuration that is reported in higher layer signaling.

Note that, when using the L1 signaling of a dynamic TDD (eIMTA) UL/DL configuration, the user terminal can conduct CSI measurements in DL subframes reported by the UL/DL configuration.

### (Measurements in FleD Carrier)

Next, measurements in an FleD carrier (in particular, DL resources that are allocated to the UL band) will be described below.

As mentioned earlier, a UL carrier (FleD carrier) in which DL transmission is configured is associated with a DL carrier (DL in FDD bands) that forms a pair together. Also, if a structure is employed in which downlink control information is not transmitted and received in the FleD carrier, it is possible to make the measurements for mobility unnecessary. In this way, an FleD carrier is different from an SCell in CA in that an FleD carrier is used as a set with a paired band (for example, a DL band).

Meanwhile, in the FleD carrier (in particular, DL), it might occur that the transmission power is configured lower than usual (for example, DL transmission in the DL band) in order to reduce the interference. In this case, there is a threat that the measurement results in FleD DL resources and the measurement results in the DL band differ significantly. For example, the received power (RSRP) and/or the received quality (RSRQ) in the FleD DL carrier might become lower than those in the DL band. As a result of this, the radio base station has difficulty adequately selecting the user terminals to apply the FleD carrier to.

Consequently, according to the present embodiment, the received quality of an FleD carrier (DL) is determined by taking into account its low transmission power, so that the FleD carrier is configured in appropriate user terminals. To be more specific, it is possible to determine the received quality of an FleD carrier (DL) using the following methods.

### <Using Fixed DL Subframes>

The radio base station transmits a detection/measurement signal in fixed DL subframes that are configured in the UL band, and the user terminal can conduct measurements by using the detection/measurement reference signal. For the detection/measurement reference signal, the CRS, or the discovery signal (DRS) that is used for cell detection/measurements, can be used. Also, the transmission power of the detection/measurement signal may be the same as that of the PDSCH in fixed DL subframes, or may be reported via higher layer signaling including broadcast/RRC signaling.

### <Using DL Band Measurements>

Also, the measurement results in the FleD carrier (DL) may be determined taking into account the transmission power of each of the DL band and the FleD carrier (DL). For example, the user terminal and/or the radio base station can estimate every user terminal's RSRP for the DL signals transmitted in the FleD carrier based on the difference between the DL transmission power of the DL carrier and the DL transmission power of the FleD carrier, and determine whether or not the FleD carrier is applicable. By this means, it is possible to reduce the interference due to the DL transmission in the FleD carrier, and conduct measurements of the FleD carrier adequately.

### <Using SRS>

Also, the frequency that is used in DL transmission in the FleD carrier is the same as the frequency that is used in UL transmission. Consequently, based on the measurement results of the reference signals (for example, the SRS) transmitted in the FleD carrier (UL), the measurement results in the FleD carrier (DL) may be estimated. By this means, it is possible to reduce the interference due to the DL transmission in the FleD carrier, and, furthermore, conduct FleD carrier measurements adequately.

### (Channel State Measurement Reference Signal)

Next, the configuration and transmission method of the channel state measurement reference signal (CSI-RS) in the FleD carrier will be described below.

According to the present embodiment, the radio base station can be structured to transmit measurement reference signals (for example, the CSI-RS) in FleD DL resources regardless of the FleD DL subframe configuration. Note that, as for the FleD DL subframe configuration, the normal (DL band) DL subframe configuration, the FleD DL subframe configurations shown in above FIGs. 8A to 8C and so on may be possible.

Also, it is equally possible to move (offset) the mapping (mapping locations) of the CSI-RS several symbols in the time axis direction from the conventional mapping locations. For example, in DL communication in the FleD carrier (UL band), the radio base station can shift the measurement reference signals from the mapping locations in conventional DL communication in the time axis direction and transmit these signals.

By this means, it is possible to prevent the collisions of the CSI-RS and the SRS at the far end of the subframe (for example, the last symbol of a subframe). Also, as an FleD DL subframe configuration, when a gap is provided at the far end of a subframe (see above FIGs. 8), it is possible to prevent the gap and the CSI-RS from colliding with each other.

Note that, similar to the measurement reference signals, the radio base station can shift the downlink shared channel and/or the demodulation reference signals from the mapping locations in conventional DL communication, in the time axis direction, and transmit these signals.

A fixed value may be determined as the number of symbols (offset value) over which the CSI-RS is offset, and used between the radio base station and the user terminal. Alternatively, it is also possible to report information about the offset value from the radio base station to the user terminal by using downlink control information, higher layer signaling (for example, RRC signaling) and so on.

The user terminal can measure CSI in the fixed DL subframes or scheduled DL subframes of the FleD carrier. Note that, as for the CSI, periodic CSI and/or aperiodic CSI can be used.

Also, when the user terminal fails to measure CSI, the user terminal may operate not to send (that is, drops) the CSI report, or report the latest previous measurement result. For example, when a subframe in which a CSI report is sent is a DL subframe (FleD DL subframe), the user terminal drops the CSI report.

Alternatively, when the subframes in which the CSI report is sent include no UL subframe due to FleD, the user terminal drops the CSI report.

### (HARQ)

Next, HARQ in the event an FleD carrier is employed will be described below.

In an FleD carrier, DL transmission is carried out using a UL band, so that cases occur where the timings of PUCCH transmissions and PUSCH retransmissions from the user terminal and the timings of DL transmissions in the FleD carrier overlap. In this case, how to control the user terminal's operations is the problem. According to the present embodiment, user terminal operations can be controlled as follows:

For example, in subframes that require delivery acknowledgement signals via the PUCCH (for example, ACK transmission), the use terminal can operate to conduct transmission all the time, regardless of whether or not UL/DL subframes are allocated in the FleD carrier. By this means, the radio base station can receive the PUCCH from the user terminal regardless of the UL/DL configuration in the FleD carrier. In this case, it is preferable if the radio base station applies control to avoid interference from the PDSCH.

Alternatively, when DL subframes are allocated in the FleD carrier, the user terminal can operate not to transmit the PUCCH (waits or stops). In this case, it is possible to prevent interference between UL/DL signals.

Also, in subframes in which the PUSCH needs to be retransmitted, the user terminal can operate to conduct transmission all the time, regardless of whether or not UL/DL subframes are allocated in the FleD carrier. By this means, the radio base station can receive the PUSCH from the user terminal when there is no collision with the PDSCH.

Alternatively, when DL subframes are allocated in the FleD carrier, the user terminal can operate not to retransmit the PUSCH (waits or stops). In this case, it is possible to prevent interference between UL/DL signals.

Note that, when the signaling (L1 reconfiguration signaling) to use in dynamic TDD (eIMTA) is applied, it is possible to use the HARQ mechanism of dynamic TDD. For example, the radio base station may report the UL/DL configuration and reference UL/DL configurations to the user terminal, and the user terminal may execute HARQ by employing an HARQ reference configuration that matches the TDD HARQ timings. In this case, it is possible to execute TDD carrier-equivalent HARQ in the FleD band.

### (UL Signal Transmission Method)

Next, the method of transmitting UL signals (the PUCCH, the SRS, etc.) in an FleD carrier will be described in detail.

### <PUCCH>

According to the present embodiment, PUCCH transmission opportunities can be controlled depending on whether or not a radio base station has a function for canceling DL transmission signals, the DL resource allocation method, and so on.

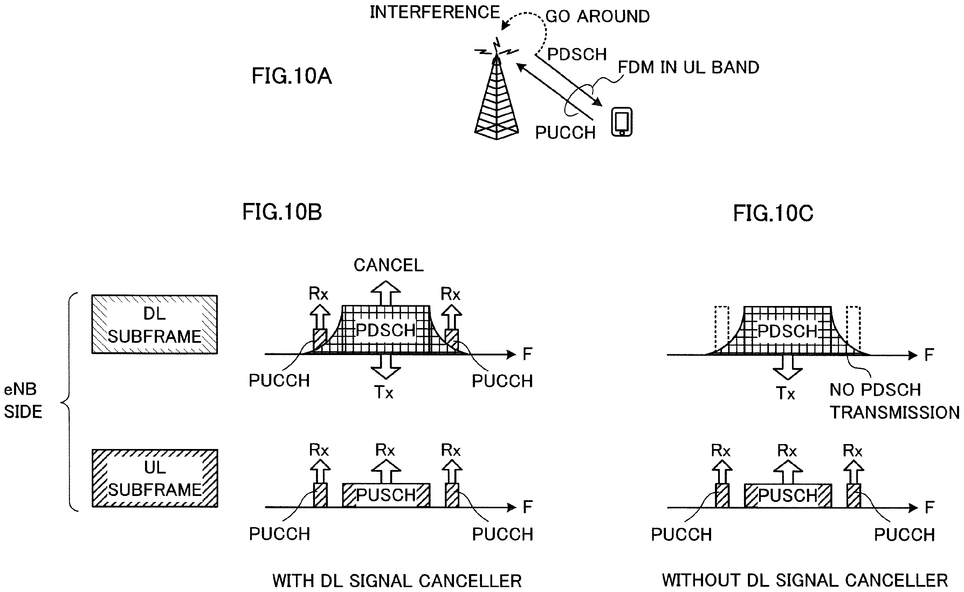

Cases occur where the PDSCH which a radio base station transmits interferes with PUCCHs which this radio base station itself receives (see FIG. 10A). Consequently, when the radio base station transmits and receives DL communication (for example, the PDSCH) and UL communication (for example, the PUCCH) concurrently in the same frequency, a DL signal canceller (canceling function) is required. Consequently, it is preferable to control PUCCH transmission depending on whether or not a DL signal canceller is provided in the radio base station.

FIGs. 10B and 10C show examples of PUCCH transmission methods that depend on whether or not a DL signal canceller is provided. FIG. 10B shows a case where the radio base station has a DL signal canceller, and FIG. 10C shows a case where the radio base station does not have a DL signal canceller. Note that the DL signals which the radio base station should cancel are signals that have been transmitted from the radio base station itself, so that, for the DL signal canceller, a canceller to use replicas of the DL signals that have been transmitted can be used.

When the radio base station has a DL signal canceller (see FIG. 10B), the radio base station can cancel the DL signals (for example, the PDSCH signal) that have been transmitted from the radio base station itself from going around. Consequently, a structure may be employed here in which the user terminal transmits the PUCCH in subframes (FleD DL subframes) in which DL communication is carried out in the UL band.

On the other hand, when the radio base station does not have a DL signal canceller (see FIG. 10C), the radio base station cannot cancel the PDSCH that has been transmitted from the radio base station itself from going around. In this case, even if the user terminal transmits the PUCCH in FleD DL subframes, there is a high possibility that the radio base station cannot receive this properly. Consequently, the user terminal can be structured not to transmit the PUCCH in FleD DL subframes when the radio base station does not have a DL signal canceller.

Consequently, when the radio base station does not have a DL signal canceller, it is possible to limit the subframes in the FleD carrier that can transmit the PUCCH to UL subframes. Alternatively, it is also possible to report information about (list of) the subframes that can transmit the PUCCH, from the radio base station to the user terminal. Note that the information about (list of) the subframes which can transmit the PUCCH can be reported to the user terminal by using downlink control information, higher layer signaling (for example, RRC signaling) and so on.

Note that, in FIGs. 10B and 10C, in order to reduce the interference against the PUCCHs of the subject cell and neighboring cells, the radio base station does not allocate (does not transmit) the PDSCH in the edge parts of the system band (bands where PUCCHs are transmitted) in FleD DL subframes.

As noted earlier, by controlling PUCCH signal transmission in the FleD carrier depending on whether or not a DL signal canceller is provided in the radio base station, it is possible to adequately transmit and receive the PUCCH signals.

### <SRS>

As mentioned earlier, the user terminal can transmit the SRS on the assumption that a subframe in which the SRS is configured in an FleD carrier is a UL subframe. In this case, as mentioned earlier, the user terminal controls the transmission of the SRS depending on the FleD DL subframe configuration (see above FIGs. 8A to 8C).

For example, when FleD DL subframe configuration 1 is employed (see above FIG. 8A), it is possible to configure the SRS even in special subframes where UL transmission is included, in addition to UL subframes.

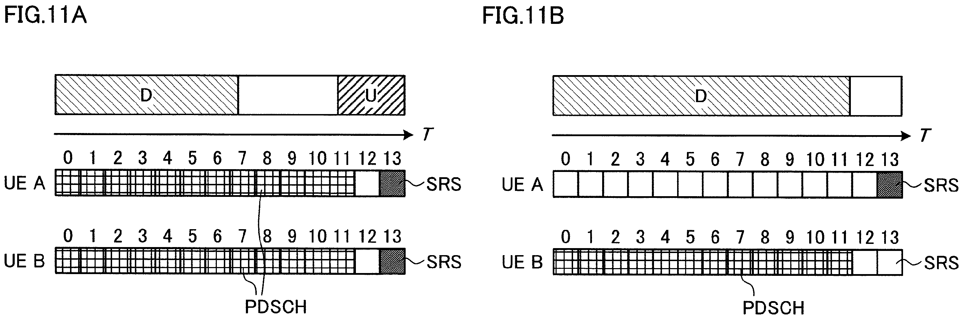

Also, when FleD DL subframe configuration 2 is employed (see above FIG. 8B), special subframes to include UL transmission are used as FleD DL subframes. Consequently, the user terminal becomes capable of configuring SRS transmission in all subframes (see FIG. 11A).

Also, when FleD DL subframe configuration 3 is employed (see above FIG. 8C), a subframe, in which DL transmission is not carried out (that is, punctured) in a second-half part of the subframe, is used as the FleD DL subframe. Consequently, user terminals can configure SRS transmission in the same subframe of the FleD carrier (DL) (see FIG. 11B). FIG. 11B shows a case where, in an FleD DL subframe, user terminal A (UE A) configures the SRS, and user terminal B (UE B) carries out DL communication.

In this way, in an FleD DL subframe, FleD DL subframe configuration 3 allows co-presence of a user terminal (UE B) that transmits the PDSCH, the CSI-RS and so on in a predetermined number of symbols from the top of the subframe, and a user terminal (UE A) that transmits the SRS in a later part of the subframe (for example, the last symbol).

### <Backward Compatibility>

Also, according to the present embodiment, it is possible to employ a radio communication method which takes user terminals not supporting FleD into account (to secure backward compatibility).

### <SRS>

For example, regarding SRS transmission, by using the above-described FleD DL subframe configurations (see above FIGs. 8), it is possible to prevent the SRS which an existing user terminal (legacy UE) transmits and a DL signal which a user terminal to support FleD transmits from colliding each other within a cell. Also, a user terminal to support FleD (for example, a Rel. 13 UE) may skip CSI measurements on the assumption that the CSI-RS is not transmitted in resources in which the SRS has been transmitted.

### <PRACH>

An existing user terminal transmits the PRACH based on FDD PRACH configurations. Consequently, the radio base station applies control so that DL transmission is not scheduled in FleD subframes where RACH resources are present. By this means, even when the existing user terminal carries out RACH transmission preferentially by using a UL band (FleD band), it is still possible to prevent collisions in the FleD band. Also, a user terminal to support FleD (for example, a UE of Rel. 13 and later versions) may skip CSI measurements on the assumption that the CSI-RS is not transmitted in these resources.

### <PUCCH>

The radio base station can control the UL scheduling for an existing user terminal and protect the PUCCH of the existing user terminal. For example, it is possible to limit the subframes to transmit the PUCCH by scheduling the existing user terminal only in specific subframes among the FleD subframes. Meanwhile, in the FleD carrier, it is possible to signal subframes other than these specific subframes as DL.

Also, the radio base station may control PUCCH reception and DL transmission at the same time. In this case, as mentioned earlier, it is possible to prevent DL signals from going around and receive the PUCCH adequately by providing a canceller function in the radio base station (see above FIG. 10B). Also, it is possible to protect the PUCCH by configuring guard bands in FleD DL subframes.

### (Structure of Radio Communication System)

Now, the radio communication system according to the present embodiment will be described below in detail.

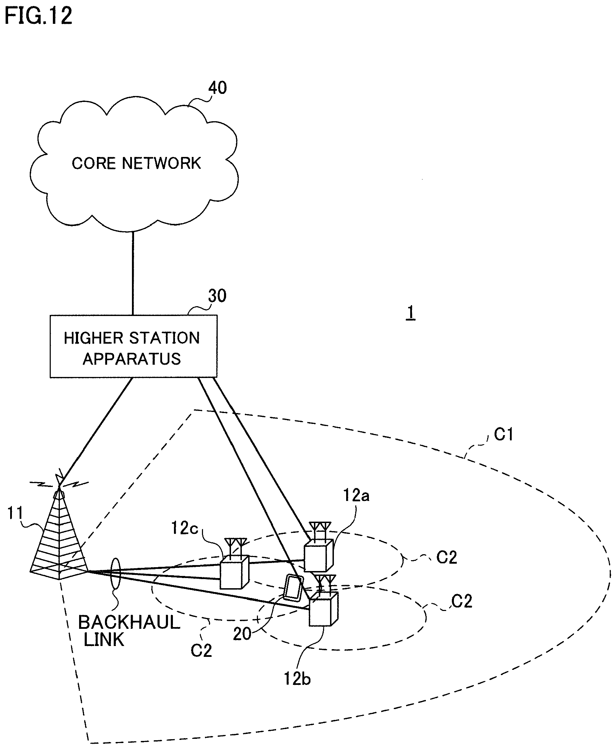

FIG. 12 is a diagram to show a schematic structure of the radio communication system according to the present embodiment. Note that the radio communication system shown in FIG. 12 is, for example, an LTE system or a system to incorporate SUPER 3G. This radio communication system can adopt carrier aggregation (CA) to group a plurality of fundamental frequency blocks (component carriers) into one, where the LTE system bandwidth constitutes one unit. Also, this radio communication system may be referred to as "IMT-advanced," or may be referred to as "4G," "FRA (Future Radio Access)," etc.

The radio communication system 1 shown in FIG. 12 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. The user terminals 20 can connect with both the radio base station 11 and the radio base stations 12. In this case, the user terminals 20 can use the macro cell C1 and the small cells C2, which use different frequencies, at the same time, by means of CA (carrier aggregation).

Between the user terminals 20 and the radio base station 11, communication is carried out using a carrier of a relatively low frequency band (for example, 2 GHz) and a narrow bandwidth (referred to as "existing carrier," "legacy carrier" and so on). Meanwhile, between the user terminals 20 and the radio base stations 12, a carrier of a relatively high frequency band (for example, 3.5 GHz and so on) and a wide bandwidth may be used, or the same carrier as that used in the radio base station 11 may be used. A new carrier type (NCT) may be used as the carrier type between the user terminals 20 and the radio base stations 12. Between the radio base station 11 and the radio base station s 12 (or between the radio base stations 12), wire connection (optical fiber, the X2 interface and so on) or wireless connection is established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "home eNodeBs," "RRHs (Remote Radio Heads)," "micro base stations," "transmitting/receiving points" and so on. Hereinafter the radio base stations 11 and 12 will be collectively referred to as a "radio base station 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands.

Now, communication channels used in the radio communication system shown in FIG. 12 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, downlink radio quality information (CQI: Channel Quality Indicator), delivery acknowledgement signals (ACKs/NACKs) and so on are transmitted by the PUCCH. Note that a case will be described in the following description where a radio base station 10 communicates with a user terminal 20 by using at least frequency-divisioned paired bands.

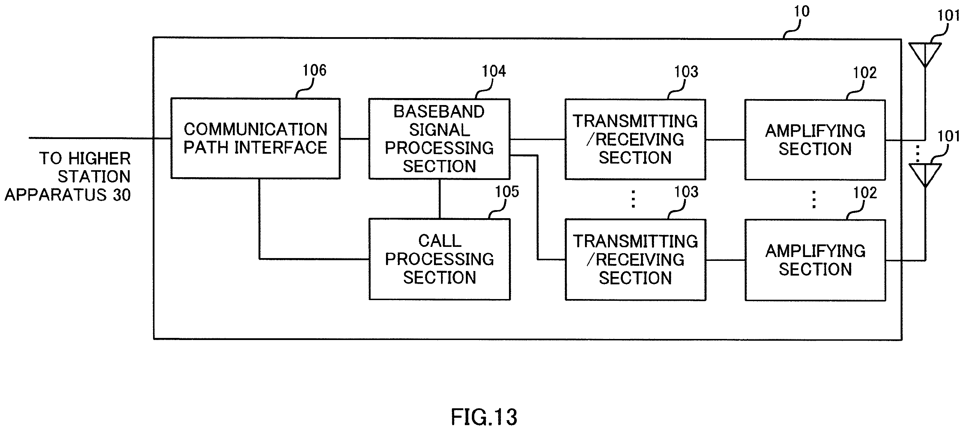

FIG. 13 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102, transmitting/receiving sections (transmitting section and receiving section) 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information for allowing communication in the cell, through higher layer signaling (for example, RRC signaling, broadcast information and so on).

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

Meanwhile, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

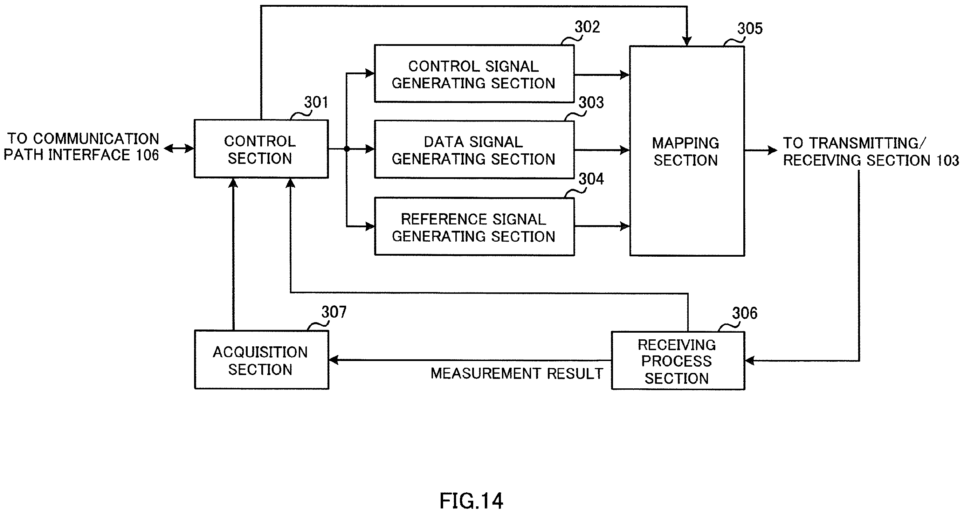

FIG. 14 is diagram to show a principle functional structure of the baseband signal processing section 104 provided in the radio base station 10 (which is, for example, a radio base station 12 that serves as a small base station) according to the present embodiment. Note that, although FIG. 14 primarily shows function blocks pertaining to characteristic parts of the present embodiment, assume that the radio base station 10 also has other function blocks that are required for radio communication.

As shown in FIG. 14, the baseband signal processing section 104 provided in the radio base station 10 is comprised of a control section (scheduler) 301, a control signal generating section 302, a data signal generating section 303, a reference signal generating section 304, a mapping section 305, a receiving process section 306 and an acquisition section 307.

The control section (scheduler) 301 controls the scheduling of downlink data signals transmitted in the PDSCH, downlink control signals communicated in the PDCCH and/or the enhanced PDCCH (EPDCCH), downlink reference signals and so on. Also, the scheduler 301 controls the scheduling (allocation control) of uplink data communicated in the PUSCH, uplink control information communicated in the PUCCH or the PUSCH, uplink reference signals and so on. Information related to the allocation control for uplink communication and downlink communication is reported to the user terminal by using downlink control signals (UL grant, DL assignment, etc.).

According to the present embodiment, the control section 301 applies control to frequency-divisioned paired bands so that UL communication and DL communication are carried out by using at least one band (for example, the UL band in FDD). Also, control is applied so that downlink control signals to control UL communication and DL communication in the UL band are transmitted from the other band of the pair (for example, the DL band in FDD), or from other component carriers including the primary cell.

Also, the control section 301 switches between and controls UL communication and DL communication in the UL band in subframe units, or in units combining subframes and subbands. Also, the control section 301 may apply control so that the DL band is used for DL communication only. Also, the control section 301 can apply control so that virtual carrier IDs are assigned to resources used in DL communication in the UL band, and reported to the user terminal.

Also, the control section 301 can control the allocation of radio resources, the configuration of FleD carriers and so on, based on command information from the higher station apparatus 30, feedback information (for example, CSI, RSRP, etc.) from each user terminal 20 output from the acquisition section 307, and so on.

The control signal generating section 302 generates the downlink control signals (the PDCCH signal and/or the EPDCCH signal) that are determined to be allocated by the control section 301. To be more specific, the control signal generating section 302 generates downlink control signals (UL grant, DL assignment, etc.) to control UL communication and DL communication in the UL band based on commands from the control section 301.

The data signal generating section 303 generates the downlink data signals (PDSCH signals) that are determined to be allocated to resources by the control section 301. The data signals that are generated in the data signal generating section 303 are subjected to a coding process and a modulation process, based on coding rates and modulation schemes that are determined based on CSI from each user terminal 20 and so on.

The reference signal generating section 304 generates the reference signals to use in downlink communication. For example, the reference signal generating section 304 generates the cell-specific reference signal (CRS), the demodulation reference signal (DM-RS), the channel state measurement reference signal (CSI-RS) and so on. Also, the reference signal generating section 304 has only to generate at least the DM-RS and the CSI-RS for DL communication in the UL band, and does not have to generate the CRS.

Also, the mapping section 304 controls the mapping of DL signals based on commands from the control section 301. Also, the mapping section 305 can apply control so that the mapping pattern for the UL band (FleD DL resources) is different from that of DL resources in the DL band. For example, in FleD DL resources, the mapping section 305 can move (offset) the mapping locations of DL signals (the CSI-RS, the DM-RS, the PDSCH signal, etc.) several symbols in the time axis direction from the mapping locations in the DL band, and map the DL signals.

The UL signal receiving process section 305 applies receiving processes (for example, decoding, data demodulation and so on) to the UL signals transmitted from the user terminal. The information that is processed in the receiving process section 306 is output to the control section 301. Also, when detecting a measurement result (a measurement report of the RSRP, CSI and so on) from the user terminal, the receiving process section 306 outputs this to the acquisition section 307.

The acquisition section 307 acquires the measurement results, which the user terminal has measured in FleD DL resources (UL band) and the DL band. Also, the acquisition section 307 can output the measurement results (measurement report) fed back from the user terminal to the control section 301, and the control section 301 can apply the FleD carrier configuration to the user terminal based on the measurement results.

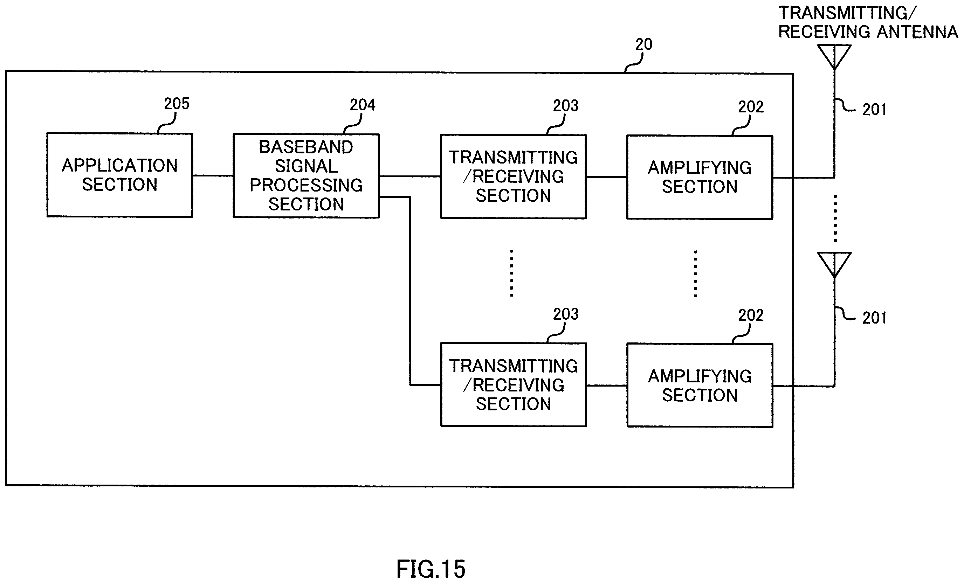

FIG. 15 is a diagram to show an overall structure of a user terminal 20 according to the present embodiment. The user terminal 20 has a plurality of transmitting/receiving antennas 201 for MIMO communication, amplifying sections 202, transmitting/receiving sections (transmitting section/receiving section) 203, a baseband signal processing section 204 and an application section 205. The transmitting/receiving sections 203 carry out UL communication and DL communication by using at least one band (for example, the UL band in FDD) in frequency-divisioned paired bands.

As for downlink data, radio frequency signals that are received in a plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control (HARQ-ACK) receiving process and so on, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

Meanwhile, uplink user data is input from the application section 205 to the baseband signal processing section 204. The baseband signal processing section 204 performs a retransmission control (HARQ-ACK) transmission process, channel coding, pre-coding, a DFT process, an IFFT process and so on, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

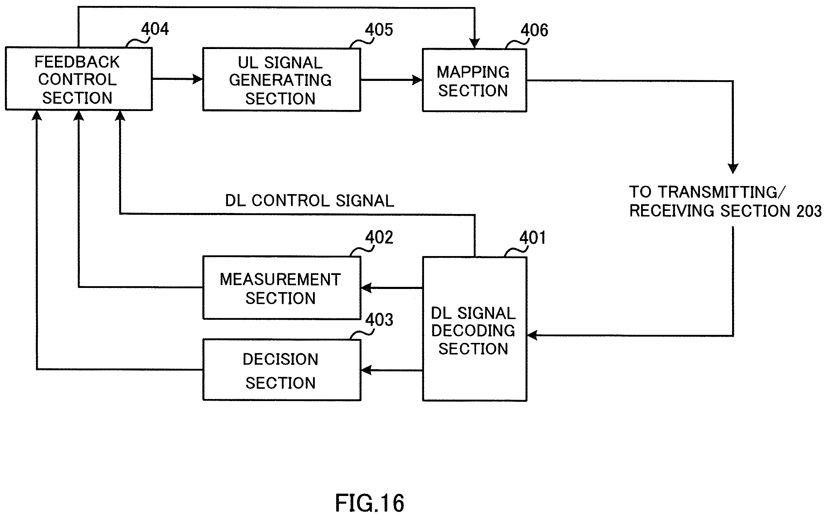

FIG. 16 is a diagram to show a principle functional structure of the baseband signal processing section 204 provided in the user terminal 20. Note that, although FIG. 16 primarily shows function blocks pertaining to characteristic parts of the present embodiment, assume that the user terminal 20 also has other function blocks that are required for radio communication.

As shown in FIG. 20, the baseband signal processing section 204 provided in the user terminal 20 is comprised at least of a DL signal processing section 401, a measurement section 402, a decision section 403, a feedback control section 404, a UL signal generating section 405 and a mapping section 406.

The downlink control signal processing section 401 performs the demodulation, decoding and other processes of the downlink control signals transmitted in the downlink control channel, and outputs the scheduling information (information about the allocation to uplink resources, and so on) to the feedback control section 404. Also, the DL signal processing section 401 decodes the downlink data signals transmitted in the downlink shared channel (PDSCH), and outputs the results to the decision section 403.

The measurement section 402 measures the received power (RSRP) and channel states (CSI) by using the DL signals (for example, downlink reference signals). In this case, the measurement section 402 can conduct the measurements taking into account the low transmission power of the FleD carrier (DL). For example, the measurement section 402 can conduct the measurements by using the detection/measurement reference signals configured in the FleD carrier (UL band). Also, the measurement section 402 can estimate the received power (RSRP) and so on of the DL signals transmitted in the FleD carrier based on the difference between the DL transmission power of the DL carrier and the DL transmission power of the FleD carrier.

Based on the decoding results in the downlink data signal decoding section 402, the decision section 403 decides the retransmission control decision (ACK/NACK) for each DL subframe (delivery acknowledgement (ACK/NACK)). The delivery acknowledgement decisions in the decision section 403 are output to the feedback control section 404.

Based on the scheduling information output from the downlink control signal processing section 401 and the retransmission control decisions output from the decision section 403, the feedback control section 404 controls the generation of delivery acknowledgement signals (ACK/NACK), the allocation to PUCCH resources, the timing to send feedback, and so on. Also, the feedback control section 404 controls the reporting of measurement reports based on the measurement results output from the measurement section 402.

Also, as mentioned earlier, the feedback control section 404 can adequately control UL transmission depending on the subframe configuration in the FleD carrier, the types of the signals to transmit, and so on.

The UL signal generating section 405 generates uplink control signals (feedback signals such as delivery acknowledgement signals, channel state information (CSI) and so on) based on commands from feedback control section 404. Also, the UL signal generating section 405 generates uplink data signals based on commands from the feedback control section 404.

The mapping section 406 controls the allocation of the uplink control signals (delivery acknowledgement signals and so on) and the uplink data signals to radio resources (the PUCCH, the PUSCH, etc.) based on commands from feedback control section 404.

In this way, UL communication and DL communication are carried out using one of frequency-divisioned paired bands, and control signals to control the scheduling of UL communication and DL communication are transmitted from the other paired band. By this means, even when communication is carried out by using frequency-divisioned paired bands, it is still possible to use radio resources effectively.

Note that the radio base stations and user terminals according to the present embodiment have hardware including a communication interface, a processor, a memory, a display and input keys, and, in the memory, software modules to be executed on the processor are stored. Also, the functional structures of the radio base stations and the user terminals may be implemented by using the above-described hardware, may be implemented by using the software modules to be executed on the processor, or may be implemented by combining both of these.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. Consequently, the description herein is only provided for the purpose of illustrating examples, and should by no means be construed to limit the present invention in any way.

The disclosure of Japanese Patent Application No. 2014-101529, filed on May 15th, 2014, including the specification, drawings and abstract, is incorporated herein by reference in its entirety.

## Claims

1. A radio base station comprising:
a transmitting/receiving section that carries out transmission and reception with a user terminal by using frequency-divisioned paired bands;
a control section that applies control so that UL communication and DL communication are carried out in at least one band of the paired bands; and
a generating section that generates downlink control signals to control UL communication and DL communication in the one band,
wherein the control section applies control so that the downlink control signals are transmitted from the other band paired with the one band, or from another component carrier.

2. The radio base station according to claim 1, wherein the one band is a UL band that is used in conventional FDD, and the other band is a DL band that is used in conventional FDD.

3. The radio base station according to one of claim 1 and claim 2, wherein the control section applies control so that UL communication and DL communication in the one band are switched and controlled in subframe units or in units combining subframes and subbands.

4. The radio base station according to claim 1 and claim 2, wherein the control section switches and controls UL communication and DL communication in the one band based on a TDD UL/DL configuration.

5. The radio base station according to claim 1 and claim 2, wherein the control section uses the other band for DL communication only.

6. The radio base station according to claim 1, wherein the control section assigns virtual carrier ID to resources used in DL communication in the one band and reports the virtual carrier IDs to the user terminal.

7. The radio base station according to claim 1, wherein, in the one band, the transmitting/receiving section transmits the DL signals by using at least a special subframe configuration.

8. The radio base station according to claim 1, wherein, in the one band, the transmitting/receiving section transmits DL signals by using a subframe configuration in which the DL signals are allocated from the top of a subframe to a predetermined symbol and in which the rest of the symbols are punctured.

9. A user terminal that communicates with a radio base station by using frequency-divisioned paired bands, the user terminal comprising:
a transmitting/receiving section that carries out UL communication and DL communication in at least one band of the paired bands; and
a control section that controls UL communication and DL communication in the one band based on downlink control signals,
wherein the transmitting/receiving section receives the downlink control signals from the other band paired with the one band, or from another component carrier.

10. A radio communication method in a radio base station that communicates with a user terminal by using frequency-divisioned paired bands, the radio communication method comprising the steps of:
applying control so that UL communication and DL communication are carried out in at least one band of the paired bands;
generating downlink control signals to control UL communication and DL communication in the one band; and
transmitting the downlink control signals from the other band paired with the one band, or from a primary cell.
